# EUROPÄISCHE PATENTSCHRIFT

(11) **EP 1 454 823 B1**
(45) Veröffentlichungstag und Bekanntmachung des Hinweises auf die Patenterteilung: **08.04.2009**
(21) Anmeldenummer: 04003146.0
(22) Anmeldetag: 12.02.2004
(51) Int. Cl.: B62J 1/00

(54) **Sattel**
Saddle
Selle

(30) Priorität: 03.03.2003 DE 10309352
(43) Veröffentlichungstag der Anmeldung: 08.09.2004
(73) Patentinhaber: Scholz, Hans, 53474 Bad Neuenahr-Ahrweiler (DE)
(72) Erfinder: Scholz, Hans, 53474 Bad Neuenahr-Ahrweiler (DE)
(74) Vertreter: Michalski Hüttermann & Partner Patentanwälte

(56) Entgegenhaltungen:
- DE-U1- 20 100 412
- US-A- 621 139
- US-A- 6 056 356
- US-B1- 6 209 954

## Beschreibung

Die Erfindung betrifft einen Sattel für pedalbetätigbare Vorrichtungen, insbesondere Fahrräder, mit zwei im Abstand voneinander angeordneten und für jeweils eine Gesäßhälfte vorgesehenen Sitzhälften, wobei jede Sitzhälfte auf ihrer Unterseite eine Kalottengelenkanordnung aufweist, die Kalottengelenkanordnung jeweils eine im wesentlichen hohlkugelförmige Pfanne und ein darin bewegbares Kalottenelement umfassen, ein Trägergestänge mit zwei Trägern vorgesehen ist, die jeweils an einem Kalottenelement befestigt sind, so daß der Sattel mittels des Trägergestänges mit einer Sattelstütze verbindbar ist und die Kalottengelenke jeweils eine Einrichtung aufweisen, mittels derer der Bewegungsbereich des Kalottenelements in der Pfanne beschränkt ist. Ein solcher Sattel ist z. B. aus der DE 201 00 412 U1 bekannt. Eine Sattel gemäß dem Oberbegriff von Anspruch 1 ist aus der US-A-6,056,356 bekannt.

Sättel, insbesondere Fahrradsättel, sind trotz Polsterungen, Federungen und weitestgehendem Weglassen solcher Stellen, die beim Radfahrer Druckstellen erzeugen können, im allgemeinen nach einem statischen Prinzip konstruiert. Dadurch wird die vom Radfahrer eingesetzte Kraft, nämlich seine Körperund Muskelkraft, nicht optimal auf die vorgegebene Kreisrotation der Pedalen umgesetzt. Die Reibung der Oberschenkel am Sattelrand, die Druckbelastung des Gesäßes, ein Überschießen der Beinbewegung - die Knie- und Hüftgelenke führen nämlich eine mehr "S"-förmige als runde Bewegung relativ zur Pedalachse aus - sowie ein Hin- und Herwiegen des Oberkörpers des Radfahrers verursachen in der Summe die Verschwendung eingesetzter Kraft, so daß insgesamt ein unökonomischer Bewegungsablauf erzielt wird. Hinzu kommt ein durch Druckstellen beim Radfahrer hervorgerufenes Unwohlsein, das darüber hinaus zu gesundheitlichen Einschränkungen und Gesundheitsschäden führen kann. Trotz Verwendung von Polsterungen, wie Gel-Kissen, wird von Durchblutungsstörungen der Genitalien, Harnwegsentzündungen, Mikrotraumen der Hoden oder der Prostata bis hin zu Unfruchtbarkeit und Impotenz berichtet.

Seit einiger Zeit sind federnde Sattelstützen und sogar vollgefederte Fahrräder verfügbar. Solche federnden Sattelstützen bzw. vollgefederten Fahrräder sind sinnvoll, jedoch vorwiegend für die Entlastung der Wirbelsäule von Relevanz. Die zuvor angesprochenen Problematiken lassen sich damit nicht vermeiden.

Ferner sind Fahrradsättel bekannt, die, wie eingangs beschrieben, zwei im Abstand voneinander angeordnete und für jeweils eine Gesäßhälfte vorgesehene Sitzhälften aufweisen. Ein solcher Sattel ist z. B. aus der DE 295 17 194 U1 bekannt. Bei diesem Sattel sind die beiden im Abstand voneinander vorgesehenen Sitzhälften beweglich gelagert, wobei allerdings nur eine solche Bewegung möglich ist, die einem Verkippen der Sitzhälften um eine Achse entspricht, die im wesentlichen parallel zum Boden und senkrecht zur Längsachse des Fahrrades verläuft, welche Längsachse im wesentlichen der Fahrtrichtung entspricht. Damit ist bei diesem bekannten Sattel problematisch, daß die möglichen Bewegungen der beiden Sitzhälften nicht den biomechanisch günstigsten Bewegungen der Beine, des Beckens und des Oberkörpers beim Radfahren folgen können.

Dieses Problem soll bei dem aus der DE 201 00 412 U1 bekannten Sattel dadurch gelöst sein, daß die Sitzhälften jeweils auf einem Gelenk, wie einem Gummigelenk oder einem Kugelgelenk, gelagert sind. Dabei soll eine Begrenzung auf ein kleines Drehsegment vorgesehen sein. Der in der DE 201 00 412 U1 beschriebene Sattel ermöglicht jedoch keinen festen und angenehmen Sitz, so daß er sich in der Praxis nicht durchgesetzt hat.

Aus dem Stand der Technik sind eine Vielzahl weiterer Sättel mit zwei im Abstand voneinander angeordneten und für jeweils eine Gesäßhälfte vorgesehenen Sitzhälften bekannt, wozu exemplarisch auf die DE 93 478 A, die DE 101 448 A und die DE 827 008 B verwiesen wird.

Ausgehend von dem eingangs beschriebenen Sattel mit zwei im Abstand voneinander angeordneten und für jeweils eine Gesäßhälfte vorgesehenen Sitzhälften ist es die Aufgabe der Erfindung, einen solchen Sattel bereitzustellen, der eine praktisch druckstellenfreie Verwendung bei optimaler Kraftübertragung auf die Pedalen und gleichzeitig festem Sitz gewährleistet.

Ausgehend von dem eingangs beschriebenen Sattel ist die zuvor angegebene Aufgabe durch die Merkmale von Anspruch 1 gelöst.

Von vorne bzw. hinten gesehen, bilden die Kalottengelenkachsen damit eine V-Form. Vorzugsweise verlaufen die Träger des Trägergestänges, die mit den Kalottenelementen verbunden sind, längs der Kalottengelenkachsen, so daß von vorne bzw. hinten gesehen die Träger ebenfalls V-förmig zueinander stehen, an ihren an den Kalottenelementen befestigten Enden also einen größeren Abstand voneinander aufweisen als an ihren den Kalottenelementen abgewandten Enden.

Dadurch, daß die Kalottengelenkachsen, um die die Kalottenelemente in ihrer jeweiligen Pfanne bewegbar sind, erfindungsgemäß jeweils nach außen geneigt sind, wobei gleichzeitig der Bewegungsbereich der Kalottenelemente in der Pfanne beschränkt ist, wird erreicht, daß die beiden Sitzhälften jeweils weniger nach innen als nach außen kippen können. Insbesondere ist damit erreichbar, daß die beiden Sitzhälften beim Kippen nach innen am Ende des Bewegungsbereichs eine in wesentlichen ebene Sitzfläche bilden. Nach außen können die beiden Sitzhälften jeweils wesentlich weiter verkippt werden, was einem ergonomischen Betätigen der Pedalen ohne Gegendruck durch den Sattel entgegenkommt.

Es hat sich gezeigt, daß es vorteilhaft ist, wenn die Kalottengelenkachsen einen Winkel einschließen, der im Bereich zwischen 10° und 30° liegt. Insbesondere ist gemäß einer bevorzugten Weiterbildung der Erfindung vorgesehen, daß die Kalottengelenkachsen einen Winkel von 20° einschließen. Ganz besonders bevorzugt entsprechen die Träger des Trägergestänges dabei den Kalottengelenkachsen, so daß die Träger einen entsprechenden gleichen Winkel zueinander aufweisen.

Bei der Verwendung des erfindungsgemäßen Sattels, also in dessen montiertem Zustand, ist die Kalottengelenkachsen auch nach vorne geneigt. Damit wird im Ergebnis ein geringeres Verkippen der beiden Sitzhälften nach hinten als nach vorne ermöglicht. Insbesondere ist es auf diese Weise möglich, ein Verkippen der beiden Sitzhälften nach hinten nicht über die Horizontale hinaus zuzulassen. Daß die Kalottengelenkachsen nach vorne geneigt sind, wird durch ein entsprechend ausgebildetes Trägergestänge erzielt. Zu berücksichtigen ist dabei jedoch auch die Montage des Trägergestänges an einer Sattelstütze, wobei heute verfügbare Sattelstützen im allgemeinen eine Justage des Neigungsbereichs des Trägergestänges und damit des Sattels nach vorne bzw. hinten ermöglichen.

Grundsätzlich ist es möglich, den Bewegungsbereich des Kalottenelements in der Pfanne einer jeweiligen Kalottengelenkanordnung auf verschiedene Weisen zu erzielen. Gemäß einer bevorzugten Weiterbildung der Erfindung ist jedoch vorgesehen, daß als Einrichtung zur Beschränkung des Bewegungsbereichs des Kalottenelements in der Pfanne das Kalottenelement an seinem oberen Ende oder/und an seinem unteren Ende einen Kragen aufweist, der am Ende des Bewegungsbereichs mit dem Rand der Pfanne in Anschlag kommt. Auf diese Weise kann der Raumwinkel, innerhalb dessen das Kalottenelement in der Pfanne bewegbar ist, genau vorbestimmt werden. Ist sowohl am oberen Rand als auch am unteren Rand des Kalottenelements jeweils ein Kragen vorgesehen, so handelt es sich um eine Doppelkragenkalottengelenk, das in einer Ringpfanne angeordnet ist.

Gemäß einer bevorzugten Weiterbildung der Erfindung ist dabei insbesondere vorgesehen, daß der Rand der Pfanne und der am Ende des Bewegungsbereichs mit dem Rand der Pfanne in Anschlag kommende Kragen des Kalottenelements derart aneinander angepaßt sind, daß es zu einer ausgedehnten Auflage des Kragens des Kalottenelements auf dem Rand der Pfanne kommt. Konkret bedeutet dies, daß der Kragen des Kalottenelements und der mit diesem zusammenwirkende Rand der Pfanne winkelmäßig aneinander angepaßt sind, so daß es nicht nur zu einer punktförmigen Auflage der beiden Elemente aneinander, sondern wenigstens zu einer Auflage längs einer Linie kommt. Auf diese Weise werden die zwischen dem Kalottenelement und der Pfanne wirkenden Kräfte besser verteilt, was die Abnutzung der Kalottengelenkanordnung insgesamt verringert. Außerdem sind die Kragen damit besonders gut als Führungselemente für die Bewegung des Kalottengelenks geeignet. Es wird praktisch eine Gleitbewegung der Kragen auf dem Rand der Ringpfanne ermöglicht; der Anschlag kann als Gleitanschlag wirken.

Die Kalottenelemente können auf verschiedene Weise mit den Trägern verbunden sein. Gemäß einer bevorzugten Weiterbildung der Erfindung ist jedoch vorgesehen, daß die Kalottenelemente mit einem Innengewinde versehen sind und die an den Kalottenelementen befestigten Enden der Träger jeweils mit einem entsprechenden Außengewinde versehen sind, so daß die Kalottenelemente auf die Enden der Träger aufschraubbar sind. Weiterhin können die Kalottenelemente gemäß einer bevorzugten Weiterbildung der Erfindung an ihrem dem jeweiligen Ende des Trägers zugewandten Ende einen Montageabschnitt aufweisen. An diesem Montageabschnitt ist z. B. ein Werkzeug, wie ein Schraubenschlüssel ansetzbar, um die Kalottenelemente auf die Träger zu schrauben.

Die beiden Sitzhälften können ohne Verbindung miteinander vorgesehen sein. Gemäß einer bevorzugten Weiterbildung der Erfindung ist jedoch zwischen den beiden Sitzhälften ein elastischer Abstandshalter vorgesehen. Dieser elastische Abstandshalter ist vorzugsweise auch in gewissem Maße auf Druck belastbar, so daß in unbelastetem Zustand die beiden Sitzhälften weder nach außen noch nach innen kippen und einen Abstand von vorzugsweise ca. 2 cm aufweisen. Ein solcher elastischer Abstandhalter zwischen den beiden Sitzhälften ist insbesondere beim Absitzen auf den Sattel vorteilhaft. Als elastischer Abstandshalter kann gemäß einer bevorzugten Weiterbildung der Erfindung ein zwischen den Sitzhälften angebrachtes Gummiband vorgesehen sein.

Grundsätzlich ist eine Vielzahl von Kalottengelenken für den erfindungsgemäßen Sattel verwendbar. Gemäß einer bevorzugten Weiterbildung der Erfindung sind die Kalottengelenke jedoch als Flanschlager ausgebildet. Diese können von den Sitzhälften separat ausgebildet und z. B. über Schraubverbindungen an den Sitzhälften befestigt sein. Gemäß einer bevorzugten Weiterbildung der Erfindung weisen jedoch die Sitzhälften jeweils eine Bodenplatte auf, wobei das jeweilige Flanschlager in die jeweilige Bodenplatte integriert ist. Bodenplatte und damit auch Flanschlager können in diesem Fall vorzugsweise aus GFK ausgebildet sein.

Weiterhin hat es sich als vorteilhaft erwiesen, daß das jeweilige Kalottengelenk unter dem Schwerpunkt der jeweiligen Sitzhälfte vorgesehen ist. Außerdem liegen die Kalottengelenkachsen vorzugsweise in einer Ebene. Während die Träger typischerweise gleich lang ausgebildet sind, kann auch vorgesehen sein, daß die Träger unterschiedlich lang sind, um z. B. Beckenfehlstellungen ausgleichen.

Wesentliche Bedeutung kommt auch der Form der beiden Sitzhälften zu. Während grundsätzlich runde oder ovale Sitzhälften einsetzbar sind, ist es gemäß einer bevorzugten Weiterbildung der Erfindung vorgesehen, daß die Sitzhälften jeweils die Form eines halben Herzens mit nach vorne weisender, kurzer und abgerundeter Spitze aufweisen. Dabei gilt weiterhin, daß vorzugsweise die Hauptachsen längs der jeweils größten Erstreckung einer jeden Sitzhälfte einen Winkel einschließen, der im Bereich zwischen 50° und 65° liegt, vorzugsweise 57° beträgt. Die Hauptachsen längs der jeweils größten Erstrekkung einer jeden Sitzhälfte läuft dabei typischerweise durch das Ende der Spitze sowie den Schwerpunkt der Sitzhälfte. Auf diese Weise wird durch die Sattelform eine optimale Beinführung und ein ergonomisches Treten der Pedalen ermöglicht. Dabei ist gemäß einer bevorzugten Weiterbildung der Erfmdung ferner vorgesehen, daß die einander zugewandten Ränder der beiden Sitzhälften annähernd parallel zueinander verlaufen, nämlich vorzugsweise, wie oben schon angesprochen, mit einem Abstand von ca. 2 cm oder etwas weniger.

Schließlich kann gemäß einer bevorzugten Weiterbildung der Erfindung vorgesehen sein, daß die Träger eine Feder- bzw. Dämpfungseinrichtung aufweisen. Eine solche Feder- bzw. Dämpfungseinrichtung dient in erster Linie der Entlastung der Wirbelsäule.

Im einzelnen gibt es nun eine Vielzahl von Möglichkeiten, den erfindungsgemäßen Sattel auszugestalten und weiterzubilden. Dazu wird auf die dem Patentanspruch 1 nachgeordneten Patentansprüche sowie auf die nachfolgende detaillierte Beschreibung eines bevorzugten Ausführungsbeispiels der Erfindung unter Bezugnahme auf die Zeichnung verwiesen. In der Zeichnung zeigt
- Fig. 1: eine Draufsicht auf einen Sattel gemäß einem bevorzugten Ausführungsbeispiel der Erfindung,
- Fig. 2: eine Seitenansicht des Sattels gemäß dem bevorzugten Ausführungsbeispiel der Erfindung,

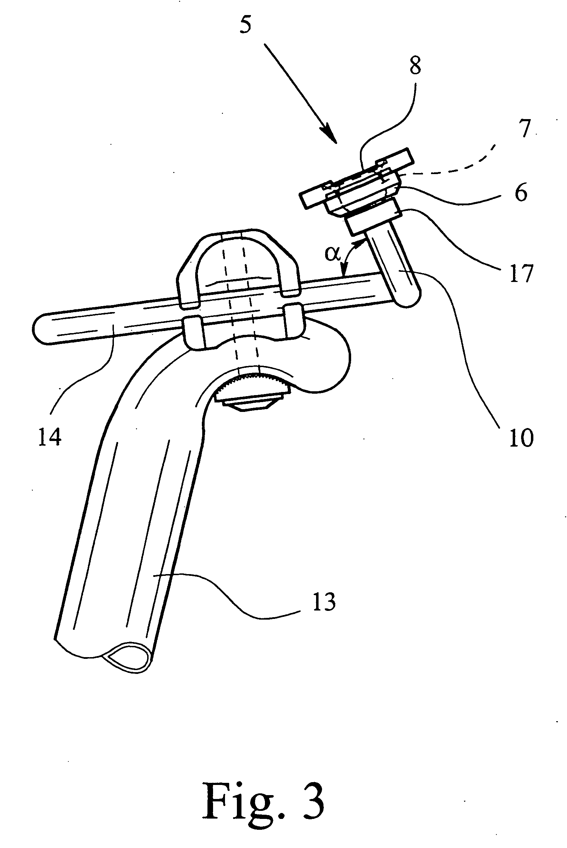

- Fig. 3: eine Seitenansicht des Sattels gemäß dem bevorzugten Ausführungsbeispiel der Erfindung mit abgenommenen Sitzhälften,

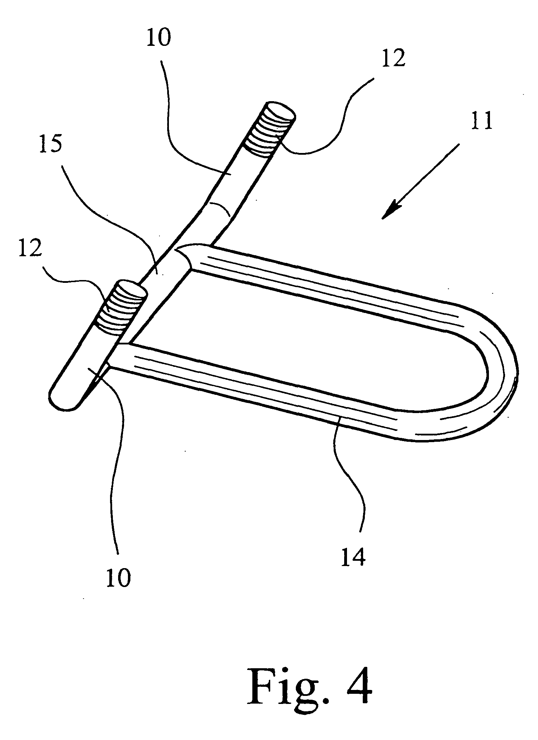

- Fig. 4: das Trägergestänge des Sattels gemäß dem bevorzugten Ausführungsbeispiel der Erfindung in einer perspektivischen Ansicht,
- Fig. 5: das Trägergestänge des Sattels gemäß dem bevorzugten Ausführungsbeispiel der Erfindung in einer Ansicht von vorne und
- Fig. 6: die Kalottengelenkanordnung des Sattels gemäß dem bevorzugten Ausführungsbeispiel der Erfindung im Schnitt.

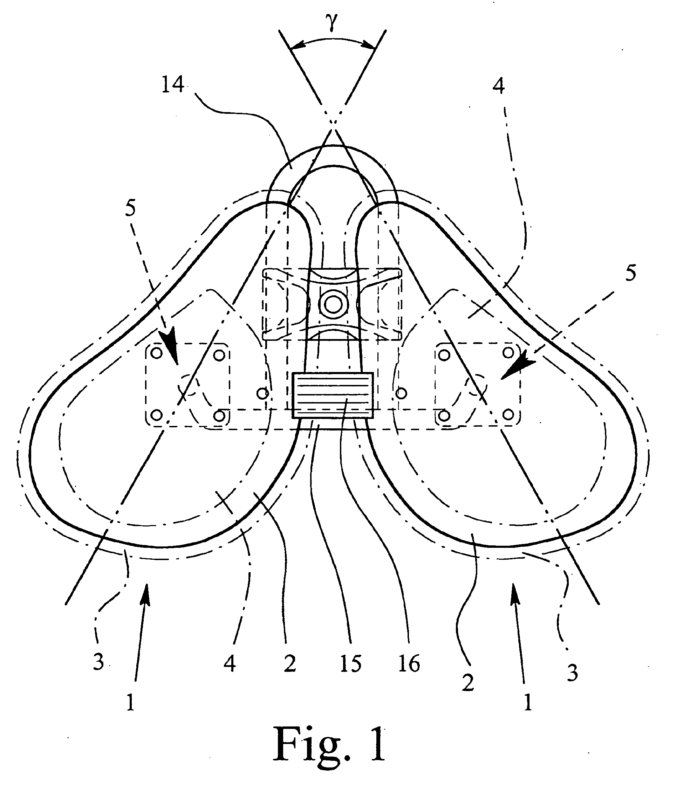

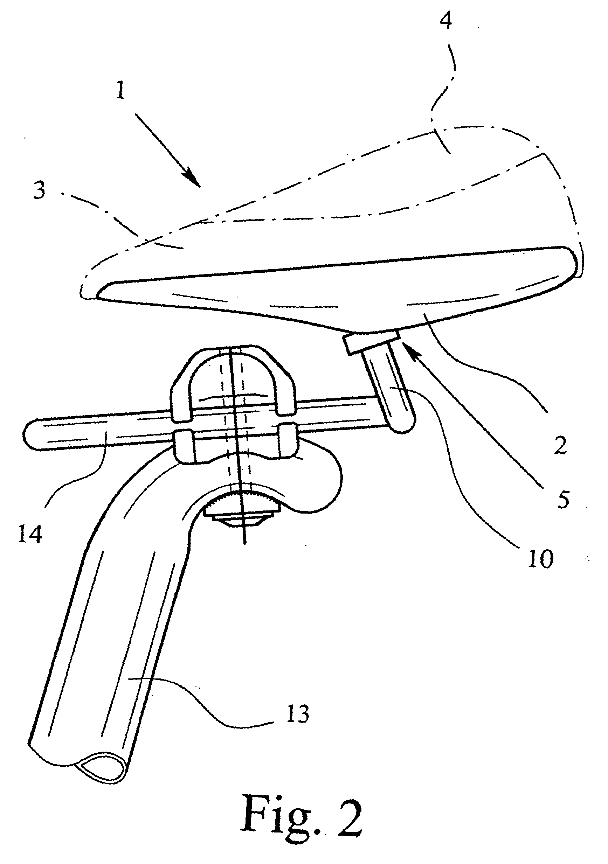

Aus Fig. 1 ist ein Fahrradsattel gemäß einem bevorzugten Ausführungsbeispiel der Erfindung in einer Draufsicht ersichtlich, wobei der Sattel zwei im Abstand voneinander angeordnete und für jeweils eine Gesäßhälfte vorgesehene Sitzhälften 1 aufweist. Wie insbesondere aus Fig. 2 ersichtlich, weisen die Sitzhälften 1 jeweils eine Bodenplatte 2 sowie eine Polsterung 3 auf. Aus Komfortgründen ist die Polsterung 3 mit einem Gel-Einsatz 4 versehen. Der Gel-Einsatz 4 dient im wesentlichen zur Entlastung der scharfkantigen Sitzknochen. Diese bestimmen im wesentlichen auch den Abstand der beiden Sitzhälften 1 voneinander bzw. den Ort der Polsterung 3: Der Abstand der Sitzknochen beträgt bei einem erwachsenen Menschen typischerweise maximal 90 mm, wobei sich der Abstand nach vorne auf ca. 40 mm verringert, so daß Abstand, Breit und Länge der Sitzhälften danach bemessen werden. Die Polsterung 3 und der Gel-Einsatz 4 sind schließlich mit einem nicht weiter dargestellten Bezug aus z. B. Leder oder einem Kunstledermaterial überzogen. Im übrigen kann auch vorgesehen sein, daß Polsterung 3, Gel-Einsatz 4 und der Bezug als eine Einheit vorgesehen sind, die lösbar auf der Bodenplatte 2 befestigbar ist, z. B. mittels eines nicht weiter dargestellten Klettverschlusses.

Auf den Unterseiten der Sitzhälften 1 ist jeweils eine Kalottengelenkanordnung 5 in Form eines Flanschlager vorgesehen. Die Kalottengelenkanordnungen 5 sind mit den Bodenplatten 2 verschraubt, können mit den Bodenplatten 2 jedoch auch einstückig ausgebildet sein. Dabei sind die Bodenplatten 2 vorzugsweise aus GFK hergestellt.

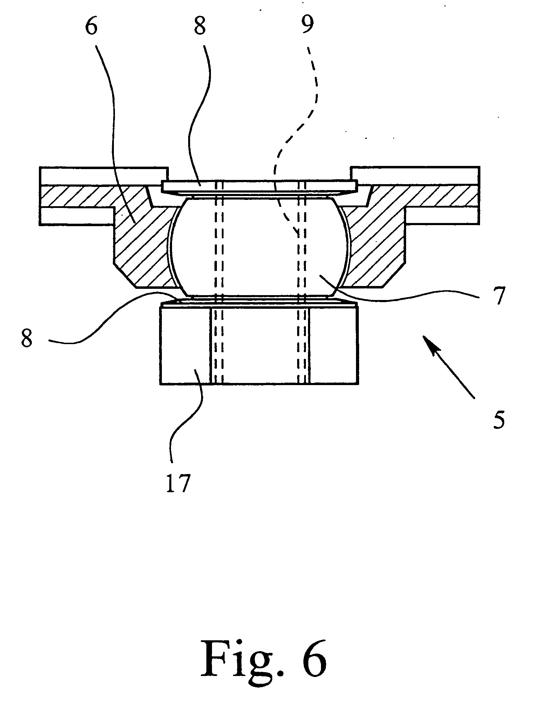

Wie insbesondere aus Fig. 6 ersichtlich, weist die Kalottengelenkanordnung 5 eine im wesentlichen hohlkugelförmige Pfanne 6 und ein darin bewegbares Kalottenelement 7 auf. Das Kalottenelement 7 weist als Einrichtungen zur Beschränkung des Bewegungsbereichs der Kalottenelemente 7 in der Pfanne 6 an seinem oberen Ende und an seinem unteren Ende jeweils einen Kragen 8 auf, der am Ende des Bewegungsbereichs mit dem Rand der Pfanne 6 in Anschlag kommt. Dabei sind der Rand der Pfanne 6 und der am Ende des Bewegungsbereichs mit dem Rand der Pfanne 6 in Anschlag kommende Kragen 8 des Kalottenelements 7 winkelmäßig derart aneinander angepaßt, daß es zu einer ausgedehnten Auflage des Kragens 8 des Kalottenelements 7 auf dem Rand der Pfanne 6 kommt.

Die Kalottenelemente 7 sind jeweils mit einem Innengewinde 9 versehen. In dieses Innengewinde 9 sind die Enden der Träger 10 des Trägergestänges 11, die jeweils ein entsprechendes Außengewinde 12 aufweisen, eingeschraubt, so daß insgesamt die Sitzhälften 1 des Sattels über das Trägergestänge 11 mit einer herkömmlichen Sattelstütze 13 verbindbar sind. Zum Einschrauben der Träger 10 in die Kalottenelemente 7 dient jeweils ein Montageabschnitt 17. Zur Verbindung mit der herkömmlichen Sattelstütze 13 dient ein im wesentlichen U-förmiger Abschnitt 14 des Trägergestänges 11, wie insbesondere Fig. 1 entnehmbar.

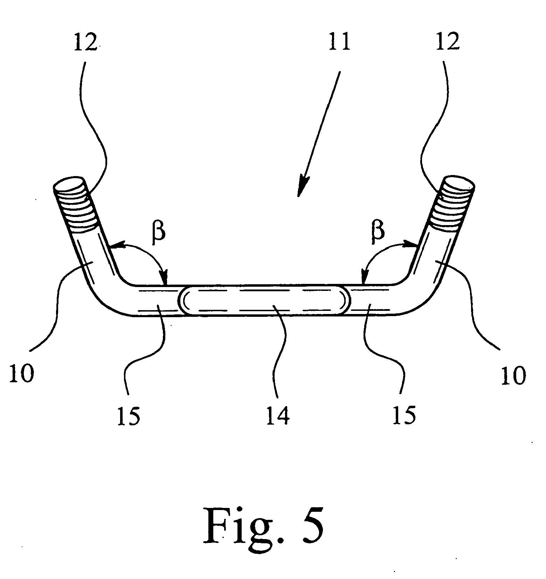

Insbesondere Fig. 5 ist nun entnehmbar, daß die Träger 10 jeweils nach außen geneigt sind, vorliegend nämlich gegenüber einem die beiden Träger 10 verbindenden Abschnitt 15 des Trägergestänges 11 jeweils einen Winkel β von ca. 100° einschließen. Damit sind die Kalottengelenkachsen, um die die Kalottenelemente 7 in ihrer jeweiligen Pfanne 6 bewegbar sind, ebenfalls nach außen geneigt, wodurch die Sitzhälften 1, gemessen an der Horizontalen, weniger nach innen als nach außen verkippbar sind.

Außerdem sind die Träger 10 in an der Sattelstütze 13 montiertem Zustand auch nach vorne geneigt, was, ebenfalls gemessen an der Horizontalen nur ein geringes Verkippen nach hinten, jedoch ein stärkeres Verkippen nach vorne der Sitzhälften 1 zur Folge hat. Der Winkel α zwischen den Trägern 10 und dem U-förmigen Abschnitt 14 des Trägergestänges 11 beträgt bei dem hier beschriebenen bevorzugten Ausführungsbeispiel der Erfindung jeweils 74°. Die damit verbundenen Vorteile sind schon weiter oben im einzelnen ausgeführt worden. Um die beiden Sitzhälften 1 im unbelasteten Zustand, also z. B. zum Aufsteigen, in einer geeigneten Position zu fixieren, ist schließlich zwischen den beiden Sitzhälften 1 ein elastischer Abstandshalter 16 in Form eines Gummibandes vorgesehen.

Die beiden Sitzhälften 1 sind, von oben betrachtet, im wesentlichen halbherzförmig ausgebildet, wobei sie jeweils eine nach vorne zeigende, kurze und abgerundete Spitze aufweisen. Die einander zugewandten Ränder der beiden Sitzhälften 1 verlaufen im wesentlichen parallel zueinander. Die in Fig. 1 eingezeichneten Hauptachsen längs der jeweils größten Erstreckung der Sitzhälften 1 schließen bei dem vorliegend beschriebenen bevorzugten Ausführungsbeispiel der Erfmdung einen Winkel von γ = 57° ein. Damit wird durch die beiden Sitzhälften 1 den beiden Gesäßknochen mit umliegendem Muskelund Weichteilgewebe hinreichend Halt geboten, wobei die abgerundeten Spitzen der Sitzhälften 1 nur kurz sind und damit nur eine minimale Fläche der Innenseite der Oberschenkel berühren, um die Beinführung zu gewährleisten. Dadurch sind Druckstellen im Genitalbereich ausgeschlossen.

Durch den Abstand der beiden Sitzhälften 1 voneinander von ca. 2 cm im Gleichgewichtszustand wird auch ein indirekter Druck durch Aufliegen der beiden Gesäßhälften gegen den Schließmuskel und damit gegen die Prostata weitestgehend reduziert. Ein direkter Druck auf den Schließmuskel und den Damm einschließlich der Harnröhre wird durch den Abstand der beiden Sitzhälften 1 voneinander praktisch vollständig ausgeschlossen. Auch für den weiblichen Radfahrer sind die Entlastung der Druckstellen von gesundheitlicher Bedeutung. Insbesondere ist für den weiblichen Radfahrer auch keine grundsätzliche Änderung des Sattels erforderlich. Bei Kindersätteln müssen lediglich die Proportionen verändert werden. Der erfindungsgemäße Sattel ist selbstverständlich auch für Ergometer geeignet.

## Patentansprüche

1. Sattel für pedalbetätigbare Vorrichtungen, insbesondere Fahrräder, mit zwei im Abstand voneinander angeordneten und für jeweils eine Gesäßhälfte vorgesehenen Sitzhälften (1), wobei jede Sitzhälfte (1) auf ihrer Unterseite eine Kalottengelenkanordnung (5) aufweist, die Kalottengelenkanordnung (5) jeweils eine im wesentlichen hohlkugelförmige Pfanne (6) und ein darin bewegbares Kalottenelement (7) umfassen, ein Trägergestänge (11) mit zwei Trägern (10) vorgesehen ist, die jeweils an einem Kalottenelement (7) befestigt sind, so dass der Sattel mittels des Trägergestänges (11) mit einer Sattelstütze (13) verbindbar ist und die Kalottengelenkanordnungen jeweils eine Einrichtung aufweisen, mittels derer der Bewegungsbereich des Kalottenelements (7) in der Pfanne (6) beschränkt ist, wobei die Träger (10) jeweils nach außen geneigt sind, so dass die Kalottengelenkachsen, um die die Kalottenelemente in ihrer jeweiligen Pfanne bewegbar sind, ebenfalls jeweils nach außen geneigt sind, **dadurch gekennzeichnet, dass** die Träger (10) in an der Sattelstütze (13) montiertem Zustand auch nach vorne geneigt sind.

2. Sattel nach Anspruch 1, **dadurch gekennzeichnet, dass** die Kalottengelenkachsen einen Winkel einschließen, der im Bereich zwischen 10° und 300° liegt, vorzugsweise ca. 20° beträgt.

3. Sattel nach Anspruch 1 oder 2, **dadurch gekennzeichnet, dass** als Einrichtung zur Beschränkung des Bewegungsbereichs des Kalottenelements (7) in der Pfanne (6) das Kalottenelement (7) an seinem oberen Ende oder/und an seinem unteren Ende jeweils einen Kragen (8) aufweist, der am Ende des Bewegungsbereichs mit dem Rand der Pfanne (6) in Anschlag kommt.

4. Sattel nach Anspruch 3, **dadurch gekennzeichnet, dass** der Rand der Pfanne (6) und der am Ende des Bewegungsbereichs mit dem Rand der Pfanne (6) in Anschlag kommende Kragen (8) des Kalottenelements (7) derart aneinander angepasst sind, dass es zu einer ausgedehnten Auflage des Kragens (8) des Kalottenelements (7) auf dem Rand der Pfanne (6) kommt.

5. Sattel nach einem der Ansprüche 1 bis 4, **dadurch gekennzeichnet, dass** zwischen den beiden Sitzhälften (1) ein elastischer Abstandshalter (16) vorgesehen ist.

6. Sattel nach einem der Ansprüche 1 bis 5, **dadurch gekennzeichnet, dass** die Kalottengelenkanordnungen (5) als Flanschlager ausgebildet sind.

7. Sattel nach einem der Ansprüche 1 bis 6, **dadurch gekennzeichnet, dass** die jeweilige Kalottengelenkanordnung (5) unter dem Schwerpunkt der jeweiligen Sitzhälfte (1) vorgesehen ist.

8. Sattel nach einem der Ansprüche 1 bis 7, **dadurch gekenntzeichnet, dass** die Sitzhälften (1) jeweils die Form eines halben Herzens mit nach vorne weisender, kurzer und abgerundeter Spitze aufweisen.

9. Sattel nach Anspruch 8, **dadurch gekennzeichnet, dass** die Hauptachsen längs der jeweils größten Erstreckung einer jeden Sitzhälfte (1) einen Winkel einschließen, der im Bereich zwischen 50° und 65° liegt, vorzugsweise 57° beträgt.

## Claims

1. Saddle for devices which can be activated by pedal, in particular bicycles, having two seat halves (1) which are arranged at a distance from one another and are each provided for one of the rider's buttocks, wherein each seat half (1) has, on its underside, a spherical cap joint arrangement (5), which spherical cap joint arrangements (5) each comprise a socket (6), essentially in the form of a hollow sphere, and a spherical cap element (7) which can be moved therein, a carrier linkage (11) is provided, having two carriers (10) which are attached to a spherical cap element (7), with the result that the saddle can be connected to a saddle support (13) by means of the carrier linkage (11), and the spherical joint arrangements each have a device by means of which the movement range of the spherical cap element (7) in the socket (6) is limited, wherein the carriers (10) are each inclined outward, with the result that the spherical cap joint axes can be moved about the spherical cap elements in their respective socket, and are likewise inclined outward in each case, **characterized in that** the carriers (10) are also inclined forward in the state in which they are mounted on the saddle support (13).

2. Saddle according to Claim 1, **characterized in that** the spherical cap joint axes enclose an angle which is in the range between 10° and 300°, being preferably approximately 20°.

3. Saddle according to Claim 1 or 2, **characterized in that**, as a device for limiting the movement range of the spherical cap element (7) in the socket (6), the spherical cap element (7) has a collar (8) at its upper end and/or at its lower end, which collar (8) comes to a stop with the edge of the socket (6) at the end of the movement range.

4. Saddle according to Claim 3, **characterized in that** the edge of the socket (6) and the collar (8), which comes to a stop with the edge of the socket (6) at the end of the movement range, of the spherical cap element (7) are matched to one another in such a way that the collar (8) of the spherical cap element (7) comes to bear in an extended fashion on the edge of the socket (6).

5. Saddle according to one of Claims 1 to 4, **characterized in that** an elastic spacer element (16) is provided between the two seat halves (1).

6. Saddle according to one of Claims 1 to 5, **characterized in that** the spherical cap joint arrangements (5) are embodied as flange bearings.

7. Saddle according to one of Claims 1 to 6, **characterized in that** the respective spherical cap joint arrangement (5) is provided under the centre of gravity of the respective seat half (1).

8. Saddle according to one of Claims 1 to 7, **characterized in that** the seat halves (1) are each in the form of half a heart with a forward pointing, short and rounded tip.

9. Saddle according to Claim 8, **characterized in that** the main axes enclose, along the respectively largest extent of each seat half (1), an angle which is in the range between 50° and 65°, being preferably 57°.

## Revendications

1. Selle pour des dispositifs pouvant être actionnés par des pédales, notamment pour des bicyclettes, comportant deux moitiés de siège (1) agencées à distance l'une de l'autre et prévues chacune pour une fesse, chaque moitié de siège (1) comportant sur sa partie inférieure un dispositif d'articulation à rotule (5), le dispositif d'articulation à rotule (5) comprenant à chaque fois un coussinet (6) globalement en forme de sphère creuse et un élément formant rotule (7) mobile à l'intérieur dudit coussinet, une tige porteuse (11) étant prévue avec deux supports (10) qui sont fixés à chaque fois à un élément formant rotule (7), de telle sorte que la selle peut être assemblée à un tube porte-selle (13) au moyen de la tige porteuse (11) et que les dispositifs d'articulation à rotule comportent chacun un dispositif au moyen duquel la plage de mouvement de l'élément formant rotule (7) dans le coussinet (6) est limitée, les supports (10) étant à chaque fois inclinés vers l'extérieur de telle sorte que les axes d'articulation à rotule autour desquels les éléments formant rotule sont mobiles dans leur coussinet respectif sont également à chaque fois inclinés vers l'extérieur, **caractérisée en ce que** les supports (10), à l'état monté sur le tube porte-selle (13), sont aussi inclinés vers l'avant.

2. Selle selon la revendication 1, **caractérisée en ce que** les axes d'articulation à rotule forment un angle qui est compris entre 10° et 300° et qui est égal de préférence à 20° environ.

3. Selle selon la revendication 1 ou 2, **caractérisée en ce que**, comme dispositif destiné à limiter la plage de mouvement de l'élément formant rotule (7) dans le coussinet (6), l'élément formant rotule (7) comporte à son extrémité supérieure et/ou à son extrémité inférieure à chaque fois un collet (8) qui, au bout de la plage de mouvement, vient en butée contre le bord du coussinet (6).

4. Selle selon la revendication 3, **caractérisée en ce que** le bord du coussinet (6) et le collet (8) de l'élément formant rotule (7) qui vient en butée contre le bord du coussinet (6) au bout de la plage de mouvement sont adaptés l'un à l'autre de telle sorte qu'il se produit un appui étendu du collet (8) de l'élément formant rotule (7) sur le bord du coussinet (6).

5. Selle selon l'une des revendications 1 à 4, **caractérisée en ce qu'**un dispositif d'écartement élastique (16) est prévu entre les deux moitiés de siège (1).

6. Selle selon l'une des revendications 1 à 5, **caractérisée en ce que** les dispositifs d'articulation à rotule (5) sont conçus comme des flasques à bride.

7. Selle selon l'une des revendications 1 à 6, **caractérisée en ce que** le dispositif d'articulation à rotule (5) respectif est prévu en dessous du centre de gravité de la moitié de siège (1) respective.

8. Selle selon l'une des revendications 1 à 7, **caractérisée en ce que** les moitiés de siège (1) ont chacune la forme d'une moitié de coeur avec une pointe courte et arrondie dirigée vers l'avant.

9. Selle selon la revendication 8, **caractérisée en ce que** les axes principaux le long de la plus grande extension respective de chaque moitié de siège (1) forment un angle qui est compris entre 50° et 65° et qui est égal de préférence à 57°.
